# EUROPEAN PATENT SPECIFICATION

(11) **EP 1 212 938 B1**
(45) Date of publication and mention of the grant of the patent: **15.06.2005**
(21) Application number: 01204733.8
(22) Date of filing: 07.12.2001
(51) Int. Cl.: A01K 29/00, A01K 11/00

(54) **Automatic transmission of alarm information**
Automatische Alarminformationsübertragung
Transmission automatique d'informations d'alarme

(30) Priority: 08.12.2000 NL 1016840
(43) Date of publication of application: 12.06.2002
(73) Proprietor: N.V. Nederlandsche Apparatenfabriek NEDAP, 7141 DC Groenlo (NL)
(72) Inventor: Harmsen, Jan Hendrik, 7255 BJ Hengelo (NL); Odinga, Kornelis, 7241 VV Lochemn (NL)
(74) Representative: Prins, Adrianus Willem, Mr. Ir.

(56) References cited:
- WO-A-94/19931
- WO-A-99/01026
- WO-A-99/30277
- WO-A-99/33021

## Description

The invention relates to a farm management system according to the preamble of claim 1, comprising a computer and at least one other automatic farming system such as an animal identification system, a milking device and an automatic feeding device which is coupled to the computer, these other farming systems being arranged for obtaining and supplying animal information about an identified animal to the computer, this animal information for instance containing information about the milk yield, the temperature and the feeding behavior of the animal, and/or these farming systems being arranged for generating and supplying error information to the computer about an error message generated in the respective farming systems, wherein, optionally, in the computer, per animal, information is stored about an identity of the animal together with the associated animal information, the computer being arranged for indicating an animal when the animal information belonging to the respective animal does not meet predetermined standards and/or when, conversely, no animal information is received which meets predetermined standards, the computer optionally being arranged for generating error information about an error message generated in the computer itself wherein the farm management system is further arranged for automatically establishing a communication connection with at least one predetermined mobile communication apparatus, for sending alarm information to the predetermined apparatus when at least one of the animals is indicated and/or when at least one of the farming systems or the computer generates error information about at least one predetermined error message.

Such a farm management system is known from WO-A-94/19931. Experience teaches that a farmer whose farm is provided with such a farm management system, is reluctant to leave his farm for some time. The fact is that his experience teaches that from time to time, the computer and the other automatic farming systems generate error messages. Some of these error messages imply that the farmer has to repair an error in the system in very short order. Other kinds of error messages do not prompt direct action. It can also occur that the farm management system determines that an animal is ill or threatens to become ill and/or exhibits other irregularities when the animal information does not meet the predetermined standards. Accordingly, in some cases, the farmer will want to intervene without delay.

The farm management system has as an advantage that error messages and/or problems with animals are automatically signalled. A drawback of this is that now that this occurs automatically, the farmer will want to know about such a message without delay so as to be able to make a responsible choice as to whether or not intervention is necessary. The consequence is that the farmer feels tied to the farm.

To that end, the farm management system according to WO-A-94/19931 is further arranged to effect in an automatic manner a communication connection for sending alarm information to the predetermined device with at least one predetermined mobile communication apparatus when at least one of the animals is indicated and/or when at least one of the farming systems or the computer generates error information about at least one predetermined error message.

A farmer who wants to leave his farm then takes along the mobile communication apparatus. He then has the reassuring idea that as soon as an error message is generated by the farm management system and/or when an animal is indicated which does not meet the predetermined standards, he is alerted via his mobile communication apparatus. Then he knows that something is wrong and, if need be, he can go back to his farm.

The invention aims to further improve the known system. To that end the farm management system according to the invention is characterized in that the farm management system is arranged, depending on the reason why alarm information has been sent, to send the alarm information to a selection of at least one mobile communication apparatus from a predetermined set of communication apparatuses. It is now possible that, depending on the error message and/or the indicated animal, a choice is made by the computer as to which mobile communication apparatus contact is to be made with. If an error message is concerned, this can, for instance be the mobile communication apparatus of a technician. When an indicated animal is concerned, the mobile telephone of the veterinarian can be automatically called. In all cases, for instance, in any case the mobile telephone of the farmer can be called.

The mobile communication apparatus can, for instance, consist of a mobile telephone. The alarm information sent to the mobile telephone can, for instance, consist of a telephone number of the connection the farm management system uses. The farmer then sees on the display of his mobile telephone that he is called by the farm management system and he then knows that something is the matter.

In particular, however, the alarm information which is forwarded to the mobile telephone can also comprise further information about the nature of the alarm. For instance, the alarm information which is sent can, for instance, comprise information about the indicated animal. Also, the information can comprise information about the identity of the indicated animal. More in particular, the information which is sent to the mobile telephone comprises information about the animal information of the respective animal on the basis of which the respective animal has been indicated. The farmer can then establish whether it is necessary that the animal be treated immediately or that an irregularity is concerned which does not require further treatment, in any case, no prompt treatment. Also, the information which is sent to the mobile telephone can comprise information about the error message generated.

If the mobile communication device consists of a mobile telephone, the information mentioned, for instance an SMS message, can be displayed on the display of the telephone. However, it is also possible that the mobile communication apparatus is provided with a mobile computer. The farmer can then connect his mobile computer to, for instance, the Internet. Then, the alarm information can be sent by the farm management system to the mobile computer of the farmer in the form of an e-mail.

It is observed that WO 99/30277 discloses an apparatus and method for monitoring an animal related space in which an image-capturing device, such as a digital camera or a video camera is arranged for monitoring a robot milking arm and the space in which such a milking arm is expected to move. Image information provided by the camera's is sent to a local control unit or a remote control means, both having a display screen for monitoring the animal related space. The remote control means may be connected to the local control means by means of a telecommunication network. The farmer may supervise the animal related space by looking either at the display screen of the local control means or on the display screen of the remote control means. In both modes the farmer will simply receive all captured information and he will need to look constantly or frequently at the screen in order to determine if everything is still all right.

In accordance with the present invention the farmer will be alerted if something is wrong.

The invention will be further elucidated on the basis of the drawing. In the drawing:

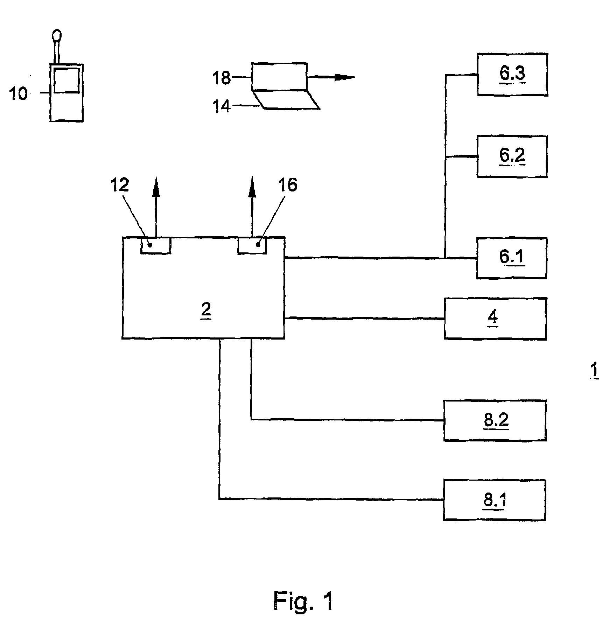

Fig. 1 shows a farm management system according to the invention as well as two mobile communication devices.

In Fig. 1 reference numeral 1 indicates a farm management system according to the invention. The farm management system is provided with a computer 2 which is coupled to other automatic farming systems. In this example, the computer 2 is coupled to an automatic milking device 4, three automatic feeding devices 6.1, 6.2 and 6.3, and two animal identification systems 8.1 and 8.2, respectively.

The automatic feeding devices 6.1 - 6.3 are automatic feeding devices known per se arranged for recognizing an animal provided with an identification means such as a transponder or responder, and for transmitting the identity of the recognized animal to the computer 2. The computer 2 is arranged in a manner known per se for, subsequently, determining what amount of feed and/or which sort of feed is to be supplied to the respective animal and controls the respective automatic feeding device accordingly so that it provides the desired amount of feed to the recognized animal.

In this example, the milking device 4 comprises a milking robot known per se. Also the milking robot is provided with means for identifying the animal. Further, the milking robot is arranged to milk the animal automatically. After milking, the robot transmits information about the milking, such as the amount of milk produced, the conductivity of the milk and/or possible other data together with the identity of the animal to the computer 2 for storage. Also, with the milking robot, the temperature of the animal can be determined, which is also supplied to the computer 2.

With the aid of the animal identification systems 8.1 and 8.2, in addition to the animal identification systems included in the milking device 4 and the automatic feeding devices 6.1 - 6.3, information can be obtained about the movement behavior of the animals within the farm.

Thus, animal information about identified animals is supplied by the farming systems 4 - 6 to the computer, this animal information containing information about, for instance, the milk yield, temperature and feeding behavior of the animal.

Further, in this example, each of the farming systems mentioned is arranged for generating an error message when the farming system does not function properly for whatever reason. In this example, each of the farming systems mentioned transmits error information about an error message generated in the respective farming system to the computer 2.

Further, the computer 2 is arranged in a manner known per se for indicating an animal when the animal information belonging to the respective animal received from one of the farming systems does not meet predetermined standards stored in the computer 2. For example, the standard can be that an animal has to report at an automatic feeding device a number of times per twenty-four hours. Accordingly, within the framework of this invention, the absence of a report of an animal at the automatic feeding device is taken as a report of the automatic feeding device to the computer that the animal has not reported. In other words, the absence of a signal is considered as a signal that something is wrong. The computer 2 then determines that the respective animal has not eaten for too long, hence does not meet the predetermined standard, and indicates the respective animal electronically. It can also occur that the computer 2 determines that the milk yield of an animal deviates from a predetermined expectation pattern stored in the computer 2. If the milk yield is too great or too small, the respective animal can be indicated. Also with the aid of the animal identification systems 8.1 and 8.2, an animal can be indicated. The fact is that it can occur that suddenly an animal is no longer in certain parts of the stable, which is considered to be deviant. Then, also, the absence of an identified animal in the proximity of the identification systems 8.1 and 8.2 is considered as animal information which is supplied to the computer (which animal information in fact consists in the fact that the animal identification systems 8.1 and 8.2 do not supply information about the respective animal to the computer) whereupon the computer 2 can decide that the respective animal does not meet the predetermined standards set and, therefore, is indicated. Also, it may happen that the respective animal is in the proximity of an animal identification system 8.1 or 8.2 for too long, which information is supplied to the computer 2, the computer 2, once again, being arranged to indicate the respective animal which does not meet the predetermined standards.

Further, the farm management system is arranged to automatically establish a connection with at least one predetermined mobile communication apparatus 10, for sending alarm information to the respective device when at least one of the animals is indicated and/or when at least one of the farming systems 4 - 8 generates an error message. It can also be that the farm management system is arranged to automatically establish a connection with the communication apparatus 10 when the computer 2 generates at least one predetermined error message. Then, the computer generates error information about this error message.

In this example, the mobile communication apparatus 10 consists of a mobile telephone. The computer 2 is provided with an internal modem 12 for telephoning the communication apparatus 10. In this example, the mobile telephone 10 is the GSM telephone known per se. However, other and future mobile telephones may also be used. When the computer 2 automatically establishes a connection via the modem 12 with the mobile telephone 10, the display of the mobile telephone 10 will indicate by whom the mobile telephone is called. A user, in this example a farmer not present at the farm, can tell, by the number, that he is being called by the computer 2. The farmer can then decide to go to the farm to find out what is the matter. In this example, the alarm information supplied by the computer 2 to the mobile communication apparatus 10 therefore simply consists of the telephone number of the connection of the modem 12.

In this example, however, the alarm information comprises further information which is also shown in the display of the mobile telephone 10. For instance, this alarm information can comprise information about the indicated animal. The information can for instance comprise the identity of the indicated animal. Also, this information can contain information about the animal information of the respective animal on the basis of which the respective animal has been indicated. This information can for instance consist in the fact that a milk yield is concerned, falling beyond the predetermined standards. Also, the information can contain the magnitude of the milk yield as such so that the farmer can assess to what extent rapid intervention is required.

Also, the alarm information sent to the mobile telephone can comprise information about the possibly generated error message. This information can, for instance, comprise information about which farming system has generated the error message and/or what error message has been generated by a farming system. Also, a combination of information about the error message and which farming system has generated the respective error message can be supplied to the mobile telephone. On the basis of this information, the farmer can then decide whether it is necessary for him to return to the farm to solve any problems. Additionally, the alarm information can comprise the error information about an error message generated by the computer itself.

Further, contact can be made with a plurality of mobile communication apparatuses 10. Depending on the error message and/or the indicated animal, a choice is made by the computer as to which mobile communication apparatus 10 contact is to be made with. If an error message is concerned, this can, for instance be the mobile communication apparatus of a technician. When an indicated animal is concerned, the mobile telephone of the veterinarian can be automatically called. In all cases, for instance, in any case the mobile telephone of the farmer can be called.

The invention is not in any way limited to the above-outlined embodiment.

It is also possible that the mobile communication device comprises, for instance, a portable computer 14. To this end, the computer 2 is provided with a modem 16 which can establish a connection with the Internet. The user of the portable computer 14 also connects this to the Internet via an internal modem 18. In this manner, the computer 2 can, for instance, send an e-mail message to the computer 14 which e-mail message then contains the earlier mentioned information which can have all forms mentioned hereinabove. Also, in this manner, the computer 2, depending on the alarm information, can make a choice to which e-mail address a message in the form of alarm information is to be sent. For instance, all alarm information can be sent to the e-mail address of the farmer while alarm information relating to an indicated animal is sent to an e-mail address of the veterinarian and alarm information relating to an error message is sent to the e-mail address of a technician. In other words, it holds that the farm management system is arranged, depending on the reason why alarm information is sent, to send the alarm information to a selection of at least one mobile communication device selected from a predetermined set of communication devices.

It is also possible that the milking device 4 comprises the computer 2. Such variants are all understood to fall within the scope of the appended claims.

## Claims

1. A farm management system (1) comprising a computer (2) and at least one other automatic farming system (8.1, 8.2), such as an animal identification system, a milking device (4) and an automatic feeding device (6.1, 6.2, 6.3), which is coupled to the computer (2), these other farming systems each being arranged for obtaining and supplying to the computer animal information about an identified animal, this animal information for instance comprising information about the milk yield, the temperature and the feeding behavior of the animal and/or these farming systems being arranged for generating and supplying to the computer (2) error information about an error message generated in the respective automatic farming systems (4-8), while optionally, in the computer (2), per animal, information is stored about an identity of the animal together with the received, associated animal information, the computer (2) being arranged for indicating an animal when the animal information belonging to the respective animal does not meet predetermined standards and/or when, conversely, no animal information is received which meets predetermined standards, the computer (2) optionally being arranged for generating error information about an error message generated in the computer itself, wherein the farm management system (1) is further arranged for automatically establishing a communication connection with at least one predetermined mobile communication apparatus, for sending alarm information to the predetermined apparatus (10, 14) when at least one of the animals is indicated and/or when at least one of the farming systems (4-8) or the computer (2) generates error information about at least one predetermined error message, **characterized in that** the farm management system (1) is arranged, depending on the reason why alarm information has been sent, to send the alarm information to a selection of at least one mobile communication apparatus (10, 14) from a predetermined set of communication apparatuses.

2. A farm management system (1) according to claim 1, **characterized in that** the alarm information which is sent to the mobile communication apparatus (10, 14) comprises information about the indicated animal.

3. A farm management system (1) according to claim 2, **characterized in that** the alarm information which is sent to the mobile communication apparatus (10, 14) comprises information about the identity of the indicated animal.

4. A farm management system (1) according to claim 3, **characterized in that** the alarm information which is sent to the mobile communication apparatus (10, 14) comprises information about the animal information of the respective animal on the basis of which the respective animal has been indicated.

5. A farm management system (1) according to any one of the preceding claims, **characterized in that** the alarm information which is sent to the mobile communication apparatus (10, 14) contains information about the generated error message.

6. A farm management system according to claim 5, **characterized in that** the alarm information which is sent to the mobile communication apparatus (10, 14) contains information about which farming system has generated an error message.

7. A farm management system according to any one of the preceding claims, **characterized in that** the mobile communication apparatus (10, 14) is provided with a mobile telephone (10).

8. A farm management system according to any one of the preceding claims, **characterized in that** the mobile communication apparatus (10, 14) is provided with a mobile computer (14).

9. A farm management system (1) according to any one of the preceding claims, **characterized in that** the alarm information which is sent to the mobile communication apparatus (10, 14) has the form of audio and/or visual information.

10. A farm management system (1) according to any one of the preceding claims, **characterized in that** at least one of the farming systems (4-8) consists of a milking robot (4).

11. A farm management system (1) according to claim 10, **characterized in that** the milking robot (4) also comprises the computer (2).

## Patentansprüche

1. Farm-Management-System (1) mit einem Computer (2) und mindestens einem weiteren automatischen landwirtschaftlichen System (8.1, 8.2), wie z. B. einem Tier-Identifikationssystem, einer Melkvorrichtung (4) oder einer automatischen Fütterungsvorrichtung (6.1,6.2,6.3), das mit dem Computer (2) gekoppelt ist, wobei diese weiteren landwirtschaftlichen Systeme jeweils zum Erhalten von und Versorgen des Computers mit Tier-Informationen über ein identifiziertes Tier vorgesehen sind, wobei diese Tier-Informationen beispielsweise Informationen über den Milchertrag, die Temperatur und das Fressverhalten des Tieres umfassen, und/oder diese landwirtschaftlichen Systeme zum Erzeugen von und Versorgen des Computers (2) mit Fehlerinformationen über eine in dem jeweiligen automatischen landwirtschaftlichen System (4-8) erzeugte Fehlermeldung vorgesehen sind, während wahlweise in dem Computer (2) für jedes Tier Informationen über die Identität des Tieres zusammen mit den empfangenen dazugehörigen Tier-Informationen gespeichert sind, wobei der Computer (2) zum Hinweisen auf ein Tier vorgesehen ist, wenn die Tier-Informationen über das jeweilige Tier vorbestimmten Standards nicht entsprechen und/oder wenn im Gegensatz dazu keine den vorbestimmten Standards entsprechende Tier-Informationen empfangen werden, wobei der Computer (2) wahlweise zum Erzeugen von Fehlerinformationen über eine in dem Computer selbst erzeugte Fehlermeldung vorgesehen ist, wobei das Farm-Management-System (1) ferner zum automatischen Herstellen einer Kommunikationsverbindung zumindest mit einer vorbestimmten mobilen Kommunikationsvorrichtung zum Senden von Alarminformationen zu der vorbestimmten Vorrichtung (10,14) vorgesehen ist, wenn auf mindestens eines der Tiere hingewiesen worden ist und/oder wenn mindestens eines der landwirtschaftlichen Systeme (4-8) oder der Computer (2) Fehlerinformationen über mindestens eine vorbestimmte Fehlermeldung erzeugt,
**dadurch gekennzeichnet, dass**
das Farm-Management-System (1) abhängig von dem Grund, aus dem Alarminformationen gesendet worden sind, die Alarminformationen an eine Auswahl von mindestens einer mobilen Kommunikationsvorrichtung (10,14) aus einem vorbestimmten Satz von Kommunikationsvorrichtungen sendet.

2. Farm-Management-System (1) nach Anspruch 1, **dadurch gekennzeichnet, dass** die Alarminformationen, die an die mobile Kommunikationsvorrichtung (10,14) gesendet werden, Informationen über das Tier, auf das hingewiesen worden ist, enthalten.

3. Farm-Management-System (1) nach Anspruch 2, **dadurch gekennzeichnet, dass** die Alarminformationen, die an die mobile Kommunikationseinrichtung (10,14) gesendet werden, Informationen über die Identität des Tieres, auf das hingewiesen worden ist, enthalten.

4. Farm-Management-System (1) nach Anspruch 3, **dadurch gekennzeichnet, dass** die Alarminformationen, die an die mobile Kommunikationseinrichtung (10,14) gesendet werden, Informationen über die Tier-Informationen über das jeweilige Tier enthalten, anhand derer auf das jeweilige Tier hingewiesen worden ist.

5. Farm-Management-System (1) nach einem der vorhergehenden Ansprüche, **dadurch gekennzeichnet, dass** die Alarminformationen, die an die mobile Kommunikationseinrichtung (10,14) gesendet werden, Informationen über die erzeugte Fehlermeldung enthalten.

6. Farm-Management-System nach Anspruch 5, **dadurch gekennzeichnet, dass** die Alarminformationen, die an die mobile Kommunikationseinrichtung (10,14) gesendet werden, Informationen darüber enthalten, welches landwirtschaftliche System eine Fehlermeldung erzeugt hat.

7. Farm-Management-System nach einem der vorhergehenden Ansprüche, **dadurch gekennzeichnet, dass** die mobile Kommunikationseinrichtung (10,14) ein Mobiltelefon (10) aufweist.

8. Farm-Management-System nach einem der vorhergehenden Ansprüche, **dadurch gekennzeichnet, dass** die mobile Kommunikationseinrichtung (10,14) einen Mobilcomputer (14) aufweist.

9. Farm-Management-System (1) nach einem der vorhergehenden Ansprüche, **dadurch gekennzeichnet, dass** die Alarminformationen, die an die mobile Kommunikationseinrichtung (10,14) gesendet werden, hörbare und/oder sichtbare Informationen sind.

10. Farm-Management-System (1) nach einem der vorhergehenden Ansprüche, **dadurch gekennzeichnet, dass** mindestens eines der landwirtschaftlichen System (4-8) ein Melkroboter (4) ist.

11. Farm-Management-System (1) nach Anspruch 10, **dadurch gekennzeichnet, dass** der Melkroboter (4) ebenfalls den Computer (2) aufweist.

## Revendications

1. Système de gestion de ferme (1) comprenant un ordinateur (2) et au moins un autre système d'exploitation agricole automatique (8.1, 8.2) tel qu'un système d'identification d'animaux, un dispositif de traite (4) et un dispositif d'alimentation automatique (6.1, 6.2, 6.3), qui est couplé à l'ordinateur (2), ces autres systèmes d'exploitation agricole étant adaptés chacun pour obtenir et fournir à l'ordinateur des informations animales concernant un animal identifié, ces informations animales comprenant par exemple des informations concernant le rendement laitier, la température et le comportement alimentaire de l'animal et/ou ces systèmes d'exploitation agricole étant adaptés pour produire et fournir à l'ordinateur (2) une information d'erreur portant sur un message d'erreur produit dans les systèmes d'exploitation agricole automatiques respectifs (4-8), tandis que, en option, dans l'ordinateur (2), par animal, de l'information est mémorisée sur l'identité de l'animal en même temps que les informations animales associées reçues, l'ordinateur (2) étant adapté pour indiquer un animal lorsque les informations animales appartenant à l'animal respectif ne satisfont pas des normes prédéterminées et/ou lorsque, à l'inverse, aucune information animale satisfaisant les normes prédéterminées n'est reçue, l'ordinateur (2) étant adapté éventuellement pour produire une information d'erreur concernant un message d'erreur produit dans l'ordinateur lui-même, le système de gestion de ferme (1) étant adapté en outre pour établir automatiquement une connexion de communication avec au moins un appareil de communication mobile prédéterminé, pour envoyer une information d'alarme à l'appareil prédéterminé (10, 14) lorsqu'au moins l'un des animaux est indiqué et/ou lorsqu'au moins l'un des systèmes d'exploitation agricole (4-8) ou l'ordinateur (2) produit une information d'erreur concernant au moins un message d'erreur prédéterminé, **caractérisé en ce que** le système de gestion de ferme (1) est adapté, en fonction de la raison pour laquelle l'information d'alarme a été envoyée, pour envoyer l'information d'alarme à une sélection d'au moins un appareil de communication mobile (10, 14) parmi un ensemble prédéterminé d'appareils de communication.

2. Système de gestion de ferme (1) selon la revendication 1, **caractérisé en ce que** l'information d'alarme qui est envoyée à l'appareil de communication mobile (10, 14) comprend une information portant sur l'animal indiqué.

3. Système de gestion de ferme (1) selon la revendication 2, **caractérisé en ce que** l'information d'alarme qui est envoyée à l'appareil de communication mobile (10, 14) comprend une information portant sur l'identité de l'animal indiqué.

4. Système de gestion de ferme (1) selon la revendication 3, **caractérisé en ce que** l'information d'alarme qui est envoyée à l'appareil de communication mobile (10, 14) comprend une information portant sur les informations animales de l'animal respectif d'après desquelles l'animal a été indiqué.

5. Système de gestion de ferme (1) selon l'une quelconque des revendications précédentes, **caractérisé en ce que** l'information d'alarme qui est envoyée à l'appareil de communication mobile (10, 14) contient une information portant sur le message d'erreur généré.

6. Système de gestion de ferme selon la revendication 5, **caractérisé en ce que** l'information d'alarme qui est envoyée à l'appareil de communication mobile (10, 14) contient une information précisant quel système d'exploitation agricole a produit un message d'erreur.

7. Système de gestion de ferme selon l'une quelconque des revendications précédentes, **caractérisé en ce que** l'appareil de communication mobile (10, 14) est pourvu d'un téléphone portable (10).

8. Système de gestion de ferme selon l'une quelconque des revendications précédentes, **caractérisé en ce que** l'appareil de communication mobile (10, 14) est pourvu d'un ordinateur portable (14).

9. Système de gestion de ferme (1) selon l'une quelconque des revendications précédentes, **caractérisé en ce que** l'information d'alarme qui est envoyée à l'appareil de communication mobile (10, 14) a la forme d'une information audio et/ou visuelle.

10. Système de gestion de ferme (1) selon l'une quelconque des revendications précédentes, **caractérisé en ce qu'**au moins l'un des systèmes d'exploitation agricole (4-8) consiste en un robot de traite (4).

11. Système de gestion de ferme (1) selon la revendication 10, **caractérisé en ce que** le robot de traite (4) comprend aussi l'ordinateur (2).
